(19) **Europäisches Patentamt**
**European Patent Office**
**Office européen des brevets**

(11) **EP 2 594 459 B1**

(12) **EUROPEAN PATENT SPECIFICATION**

(45) Date of publication and mention
of the grant of the patent:
**30.08.2017 Bulletin 2017/35**

(51) Int Cl.:
**B62D 5/04** *(2006.01)* **H02P 29/02** *(2016.01)*
**H02P 29/024** *(2016.01)*

(21) Application number: **12192595.2**

(22) Date of filing: **14.11.2012**

(54) **Motor control unit and vehicle electric power steering system**

Motorsteuereinheit und elektrisches Fahrzeug-Servolenkungssystem

Unité de commande de moteur et système de direction assistée électrique de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2011 JP 2011252784**

(43) Date of publication of application:
**22.05.2013 Bulletin 2013/21**

(73) Proprietor: **JTEKT Corporation**
**Osaka-shi**
**Osaka 542-8502 (JP)**

(72) Inventors:
• **Kawamura, Hiroshi**
**Osaka-shi, Osaka 542-8502 (JP)**
• **Mikamo, Satoru**
**Osaka-shi, Osaka 542-8502 (JP)**
• **Ito, Takehiro**
**Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**EP-A1- 1 889 774    EP-A1- 2 037 566
EP-A1- 2 164 169    US-A1- 2009 073 617**

## Description

BACKGROUND OF THE INVENTION

Field of the Invention

The invention relates to a motor control unit that executes drive control of a motor, and a vehicle electric power steering system that includes the motor control unit.

Discussion of Background

EP 2322409 A1 describes an electric power steering system in which a steering shaft or a rack shaft of a vehicle is provided with a motor and an assist force is applied from the motor to the steering shaft or the rack shaft to assist a driver's steering operation. In the electric power steering system, a target torque is set on the basis of, for example, a steering torque detected by a torque sensor provided on the steering shaft, and a current that is supplied to the motor is subjected to feedback control such that the steering torque that is detected by the torque sensor coincides with the target torque. FIG. 6 shows the configuration of a motor control device described in EP 2322409 A1.

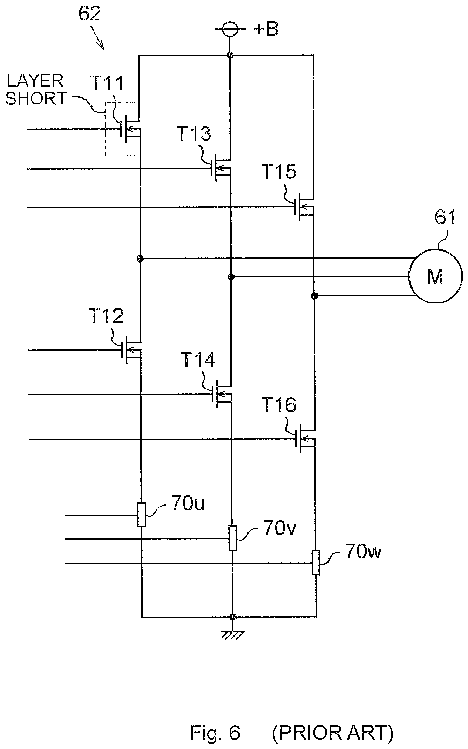

As shown in FIG. 6, the motor control device includes a motor 61, an inverter circuit 62 and a microcomputer (not shown). The motor 61 is formed of a three-phase alternating-current motor. The inverter circuit 62 converts direct current supplied from a power supply (power supply voltage "+B") into three-phase (U-phase, V-phase and W-phase) alternating currents and then supplies the three-phase alternating currents to the motor 61.
The microcomputer executes drive control of the inverter circuit 62. The inverter circuit 62 is formed of a parallel circuit that includes a pair of transistors T11, T12, a pair of transistors T13, T14, and a pair of transistors T15, T16, and three-phase alternating currents are generated from currents obtained from connection points of the respective pairs of transistors. That is, by performing switching of the transistors T11 to T16 on the basis of commands from the microcomputer, direct current supplied from the power supply to the inverter circuit 62 is converted into three-phase alternating currents.

In addition, known current sensors 70u, 70v, 70w that use shunt resistors are provided on the low potential sides of the respective pairs of transistors. That is, in the motor control device, the values of phase currents that are supplied to the motor 61 are detected by the current sensors 70u, 70v, 70w.

In the motor control device described in EP 2322409 A1, when it is determined that one of the phase current values detected by the current sensors 70u, 70v, 70w is larger than or equal to a predetermined threshold, it is determined that a short-circuit has occurred in one of the transistors T11 to T16. In addition, when it is determined that a short-circuit has occurred, all the transistors T1 to T6 are maintained in the off state by stopping driving of the inverter circuit 62. For example, in a case where a short-circuit has occurred between the drain and source (between D and S) of the transistor T11 as indicated by a long dashed double-short dashed line in FIG. 6, if a U-phase current value detected by the current sensor 70u at the timing at which the transistor T12 is turned on becomes larger than or equal to the predetermined threshold, the short-circuit is detected and all the transistors T11 to T16 are maintained in the off state. Thus, it is possible to avoid a situation where a through-current keeps flowing through the transistor T12 that pairs up with the transistor T11 that has been short-circuited. As a result, it is possible to prevent damage to the transistor T12.

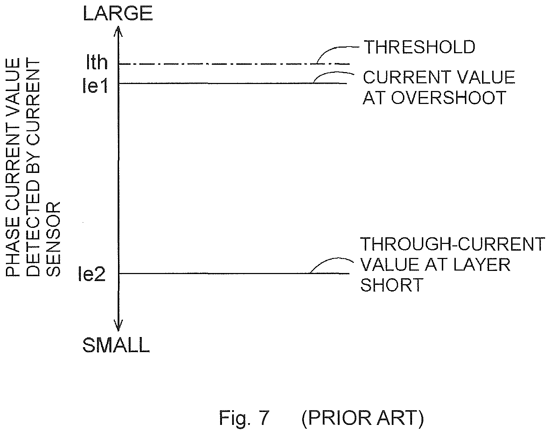

In the above electric power steering system, when a steering wheel is swiftly steered by a driver until a rack end position (steering limit position) is reached, movement of the steering shaft or rack shaft, which serves as a load of the motor 61, suddenly stops. In such a case, because the rotation of the motor 61 suddenly stops, a counter-electromotive force generated in the motor 61 suddenly decreases. In a situation where the counter-electromotive force of the motor 61 suddenly decreases, a large current (overshoot current) flows through the transistors T11 to T16 due to a delay in response of the feedback control. Such a current value at the time of an overshoot is the maximum value of current that flows through the transistors T11 to T16 in a normal state where no short-circuit has occurred. Therefore, in the above electric power steering system, in order to prevent such an overshoot current from being erroneously detected as an abnormal current when the overshoot current occurs in the inverter circuit 62, the predetermined threshold Ith is desirably set to a value slightly larger than a current value Ie1 at the time of an overshoot, as shown in FIG. 7. However, if the threshold Ith is set in this way, there is the following inconvenience.

For example, when a short-circuit that has occurred between D and S of the transistor T11 is a layer short with a large resistance value, the value of a through-current that occurs in the transistor T12 may be smaller than the current value at the time of an overshoot. Also, when a short-circuit has occurred between the gate and drain (G and D) of the transistor T11, the value of a through-current that occurs in the transistor T12 is smaller than the current value at the time of an overshoot. If such a short-circuit has occurred in the transistor T11, a U-phase current value Ie2 detected by the current sensor 70u is smaller than the predetermined threshold Ith because the threshold Ith that is a reference for abnormality determination is set larger than the current value Ie1 at the time of an overshoot. Therefore, with the method described in EP 2322409 A1, it is not possible to detect such a short-circuit.

EP 2164 169 A discloses an electric motor control apparatus which can locate a short-circuit fault point.

The electric motor control apparatus includes current control means for determining respective phase voltage commands according to currents flowing in respective phases of an electric motor and a torque current command. Current detectors are disposed in series with the switching elements in the respective phases of the inverter. Short-circuit point locating means are provided for storing a test pattern indicative of a predetermined combination for turning on switching elements of an inverter, and for locating a short-circuit fault point based on the test pattern and current detection values in the respective phases detected by the current detectors in response to the test pattern. The control means detects, using current sensors, values of the phase currents that are supplied to the motor, and determines whether a through-current has occurred in the pairs of transistors based on the detected phase current values. A first threshold is set for the phase current values and it is determined whether a through-current has occurred in the transistors based on a comparison between each of the phase current values and the first threshold. US 2009/073517 A discloses an apparatus for optimizing switching operations executed by a switching device coupled to an AC power line, wherein signals related to the waveform of the electrical phases of the power line are acquired. When a command for executing a switching operation on one of the electrical phases is issued, the signals acquired are stored. Based on the signals stored, data indicative of the severity of switching transients having occurred during the executed switching operation and second data indicative of the time are calculated and correlated to each other. Based on the data calculated, it is determined whether a parameter representative of a target point on the waveform for executing future switching operations substantially synchronous with the waveform has to be adjusted.

The present invention provides a motor control unit as defined in claim 1 that reliably detects an abnormality in transistors of an inverter circuit.

Further, a vehicle electric power steering system is provided according to claim 3 that includes the motor control unit.

According to claim 1, a first threshold is set for phase current values, a second threshold is set for the sum of the phase current values, and it is determined whether a through-current has occurred in the transistors based on a comparison between each of the phase current values and the first threshold and a comparison between the sum of the phase current values and the second threshold. Moreover, the comparison between each of the phase current values and the first threshold is made by determining whether at least one of absolute values of the phase current values is larger than or equal to the first threshold; and the comparison between the sum of the phase current values and the second threshold is made by determining whether an absolute value of the sum of the phase current values is larger than or equal to the second threshold; and it is determined that a through-current has occurred in the transistors when both a condition that at least one of the absolute values of the phase current values is larger than or equal to the first threshold and a condition that the absolute value of the sum of the phase current values is larger than or equal to the second threshold are satisfied.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a view that shows the schematic configuration of a vehicle electric power steering system;
FIG. 2 is a block diagram that shows the configuration of a motor control unit according to an embodiment of the invention;
FIG. 3A to FIG. 3G are graphs that show the correlation among a PWM carrier, voltage command signals and gate driving signals GH1 to GH3 and GL1 to GL3 in the motor control unit;
FIG. 4 is a graph that shows the correlation between phase current values detected by a current sensor at the time of various abnormalities and a threshold in the motor control unit;
FIG. 5 is a flowchart that shows the procedure of a process for suppressing occurrence of a through-current that flows through each transistor of an inverter circuit, which is executed by the motor control unit;
FIG. 6 is a circuit diagram that shows the configuration of a conventional motor control unit; and
FIG. 7 is a graph that shows the correlation between phase current values detected by a current sensor at the time of various abnormalities and a threshold in the conventional motor control unit.

DETAILED DESCRIPTION OF EMBODIMENTS

Hereinafter, embodiments of the invention will be described with reference to the accompanying drawings.

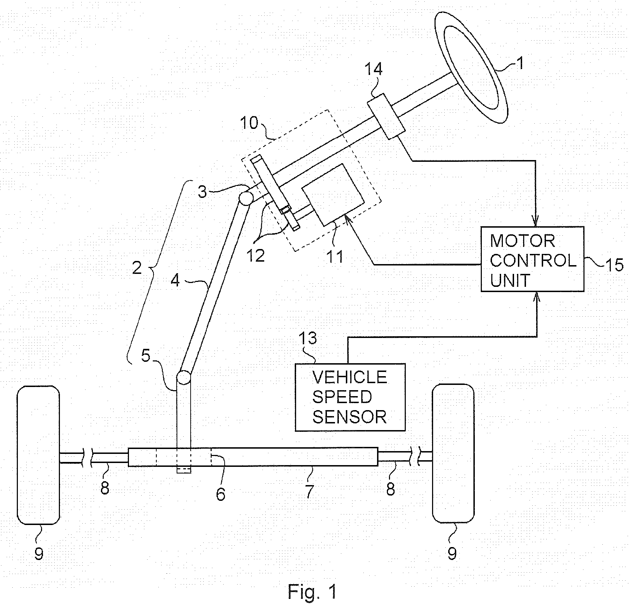

A vehicle electric power steering system according to an embodiment of the invention will be schematically described with reference to FIG. 1. As shown in FIG. 1, in a vehicle, when a steering wheel 1 is operated by a driver, a steering shaft 2 rotates on the basis of a steering force applied to the steering wheel 1. The steering shaft 2 is formed by coupling a column shaft 3, an intermediate shaft 4 and a pinion shaft 5 to each other. A rack-and-pinion mechanism 6 is coupled to a lower end portion of the pinion shaft 5. The rotation of the steering shaft 2 is converted into an axial linear motion of a rack shaft 7 via the rack-and-pinion mechanism 6. Then, as the linear motion of the rack shaft 7 is transmitted to steered wheels 9 via tie rods 8 coupled to respective ends of the rack shaft 7, the steered angle of the steered wheels 9, that is, the travelling direction of the vehicle is changed.

In the vehicle, the electric power steering system 10 according to the present embodiment includes a motor 11 that is formed of a three-phase alternating-current motor coupled to the column shaft 3 via a gear mechanism 12. The electric power steering system 10 applies motor torque to the steering shaft 2 as an assist force by transmitting the rotation of the motor 11 to the column shaft 3 via the gear mechanism 12.

In addition, the vehicle includes various sensors that detect a state of the vehicle and an operation amount of the steering wheel 1. For example, the vehicle includes a vehicle speed sensor 13 that detects a speed of the vehicle. In addition, a torque sensor 14 is provided on the column shaft 3. The torque sensor 14 detects a torque (steering torque) applied to the column shaft 3. Signals output from the sensors 13 and 14 are input into a motor control unit 15. The motor control unit 15 executes drive control of the motor 11 on the basis of the speed of the vehicle, which is detected by the vehicle speed sensor 13, and the steering torque which is detected by the torque sensor 14.

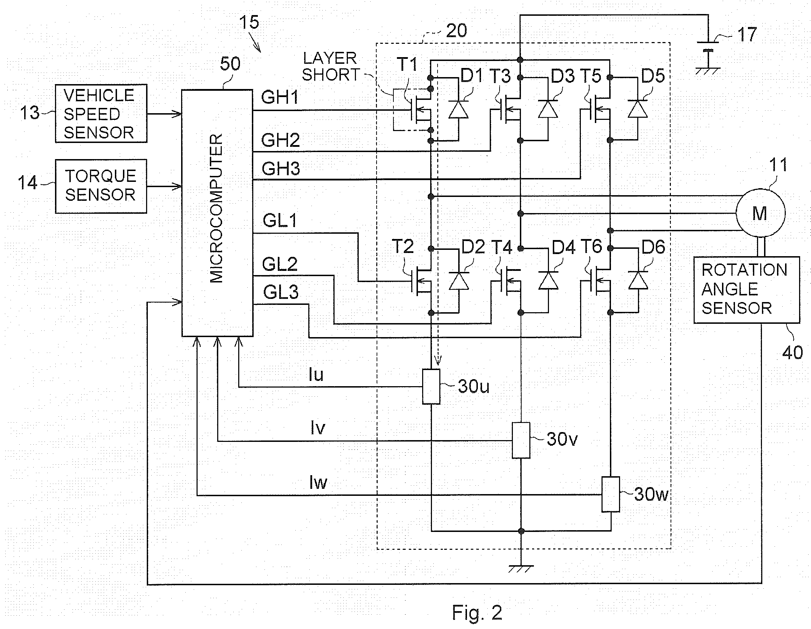

Next, the configuration of the motor control unit 15 will be described with reference to FIG. 2. As shown in FIG. 2, the motor control unit 15 includes an inverter circuit 20, a rotation angle sensor 40 and a microcomputer 50. The inverter circuit 20 converts a direct current supplied from a power supply 17, for example, an in-vehicle battery, to three-phase (U-phase, V-phase and W-phase) alternating currents. The rotation angle sensor 40 detects the rotation angle of the motor 11. The microcomputer 50 executes drive control of the inverter circuit 20.

The inverter circuit 20 is formed of a parallel circuit that includes a pair of transistors T1, T2, a pair of transistors T3, T4 and a pair of transistors T5, T6, and three-phase alternating currents are generated from currents obtained from connection points of the respective pairs of transistors. That is, as switching of the transistors T1 to T6 is performed according to gate driving signals GH1 to GH3 and GL1 to GL3 that are output from the microcomputer 50, a direct current from the power supply 17 is converted into three-phase alternating currents, and then the obtained three-phase alternating currents are supplied to the motor 11. Note that the transistors T1 to T6 are arranged such that the anodes of parasitic diodes D to D6 are on the low potential side and the cathodes of the parasitic diodes D1 to D6 are on the high potential side.

In addition, known current sensors 30u, 30v, 30w that use shunt resistors are provided on the low potential sides of the respective pairs of transistors. The microcomputer 50 detects phase current values Iu, Iv, Iw on the basis of values output from the current sensors 30u, 30v, 30w.

Subsequently, the microcomputer 50 sets a target assist force that should be applied to the steering shaft 2 on the basis of the speed of the vehicle, which is detected by the vehicle speed sensor 13, and the steering torque detected by the torque sensor 14. Then, feedback control is executed on the currents that flow through the motor 11 so that the motor 11 generates a torque corresponding to the target assist force.

Specifically, first, a target value of motor current for obtaining the target assist force is computed. In addition, deviations between the target value of motor current and the phase current values Iu, Iv, Iw detected by the current sensors 30u, 30v, 30w are calculated, and phase voltage command signals Vu, Vv, Vw used in PWM control are computed on the basis of the calculated deviations between the target value and the phase current values. Note that such computation is performed through coordinate conversion on a d/q coordinate system on the basis of the rotation angle of the motor 11, which is detected by the rotation angle sensor 40.

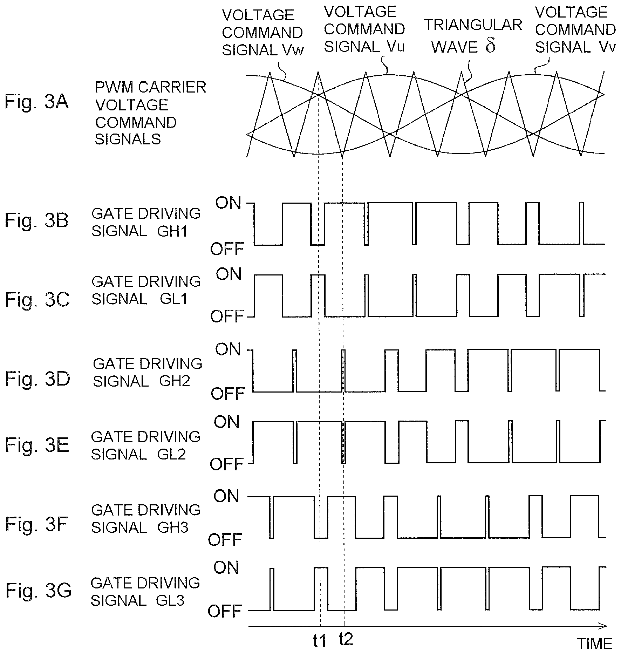

The gate driving signals GH1 to GH3 and GL1 to GL3 are generated by comparing the voltage command signals Vu, Vv, Vw with a triangular wave that is a PWM carrier (carrier wave). The following description will be provided on the assumption that the voltage command signals Vu, Vv, Vw and the triangular wave $\delta$ change, for example, as shown in FIG. 3A. In this case, as shown in FIG. 3B, the gate driving signal GH1 is set to an off signal in a period during which the voltage command signal Vu is larger than the value of the triangular wave $\delta$ and the gate driving signal GH1 is set to an on signal in a period during which the voltage command signal Vu is smaller than the value of the triangular wave $\delta$. As shown in FIG. 3C, the gate driving signal GL1 is set to an on signal in a period during which the voltage command signal Vu is larger than the value of the triangular wave $\delta$ and the gate driving signal GL1 is set to an off signal in a period during which the voltage command signal Vu is smaller than the value of the triangular wave.

Similarly, the gate driving signals GH2, GL2 are generated on the basis of a comparison between the voltage command signal Vv and the value of the triangular wave $\delta$ as shown in FIG. 3D and FIG. 3E. In addition, the gate driving signals GH3, GL3 are generated on the basis of a comparison between the voltage command signal Vw and the value of the triangular wave $\delta$ as shown in FIG. 3F and FIG. 3G.

The microcomputer 50 provides the thus generated gate signals GH1 to GH3 and GL1 to GL3 to the gate terminals of the transistors T1 to T6 of the inverter circuit 20 to turn on or off the transistors T1 to T6. Thus, the inverter circuit 20 is driven through pulse-width modulation (PWM). Thus, the motor 11 generates a torque that corresponds to a target assist force.

In the above configuration, although a current that should be supplied to the motor 11 is "0 A", currents are actually detected by the current sensors 30u, 30v, 30w in some cases. Such currents are called offset currents, and become a cause of, for example, a torque ripple. Therefore, in the present embodiment, in order to eliminate the influence of offset currents from detection values of the current sensors 30u, 30v, 30w, the following method is employed as a method of detecting the phase current values Iu, Iv, Iw.

First, the microcomputer 50 detects phase current values with the use of the current sensors 30u, 30v, 30w at the timing at which the triangular wave δ illustrated in FIG. 3A reaches its peak (for example, timing t1 in the graph) and the timing at which the triangular wave δ reaches its valley (for example, timing t2 in the graph). As shown in FIG. 3A to FIG. 3G, at the timing at which the triangular wave δ reaches its peak, the gate driving signals GH1 to GH3 each are set to an off signal, whereas the gate driving signals GL1 to GL3 each are set to an on signal. That is, the transistors T1, T3, T5 are in the off state, and the transistors T2, T4, T6 are in the on state. Thus, current values (peak current values) detected at this timing are current values on which offset current values are superimposed.

On the other hand, at the timing at which the triangular wave δ reaches its valley, the gate driving signals GH1 to GH3 each are set to an on signal, whereas the gate driving signals GL1 to GL3 each are set to an off signal. That is, the transistors T1, T3, T5 are in the on state, and the transistors T2, T4, T6 are in the off state. Thus, current values (valley current values) detected at this timing are offset current values that are actually detected by the current sensors 30u, 30v, 30w although currents that flow through the current sensors 30u, 30v, 30w should be "0 A". Then, the microcomputer 50 calculates phase current values Iu, Iv, Iw based on the peak current values Iu1, Iv1, Iw1 and the valley current values Iu2, Iv2, Iw2 detected immediately after detection of the peak current values Iu1, Iv1, Iwl, according to Equations 1 to 3 indicated below.

$$Iu = Iu1 - Iu2 \qquad \text{Equation 1}$$

$$Iv = Iv1 - Iv2 \qquad \text{Equation 2}$$

$$Iw = Iw1 - Iw2 \qquad \text{Equation 3}$$

The microcomputer 50 according to the present embodiment monitors whether a through-current has occurred in the transistors T1 to T6 of the inverter circuit 20 on the basis of the thus computed phase current values Iu, Iv, Iw. When a through-current is detected, the microcomputer stops driving of the inverter circuit 20, and maintains all the transistors T1 to T6 in the off state. Next, the details of this process will be described.

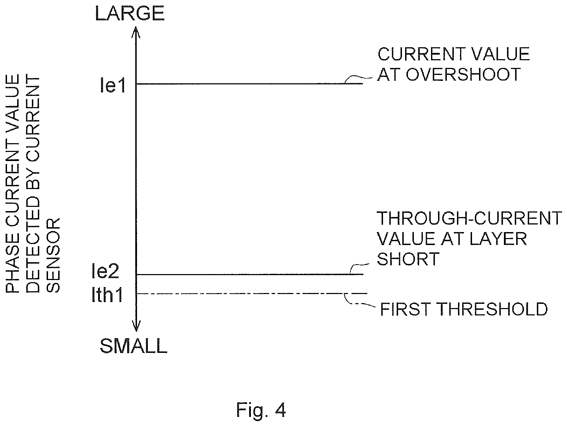

When a layer short with a large resistance value has occurred between the drain and source (D and S) of, for example, the transistor T1 as indicated by a long dashed double-short dashed line in FIG. 2, a U-phase through-current is detected by the current sensor 30u when the transistor T2 is turned on. When a short-circuit as described above has occurred in the transistor T3, a V-phase through-current is detected by the current sensor 30v when the transistor T4 is turned on. When a short-circuit as described above has occurred in the transistor T5, a W-phase through-current is detected by the current sensor 30w when the transistor T6 is turned on. Therefore, in the present embodiment, as shown in FIG. 4, a value slightly smaller than the absolute value of a value Ie2 of a through-current that occurs in the event of a layer short, or the like, is set as a first threshold Ith1 (>0) for the absolute values |Iu|, |Iv|, |Iw| of the phase current values.

According to Kirchhoffs law, a sum SI (= Iu + Iv + Iw) of the phase current values Iu, Iv, Iw is "0 A" in normal times. However, in a situation that a short-circuit has occurred between D and S of the transistor T1 as shown in FIG. 1, the sum SI of the phase current values is not "0 A". Note that, actually, due to the influence of disturbance such as noise, the sum SI of the phase current values often slightly deviates from "0 A" even in normal times. Therefore, in the present embodiment, a value slightly larger than "0 A" is set as a second threshold Ith2 (> 0) for the absolute value |SI| of the sum of the phase current values.

Therefore, in the present embodiment, it is determined that a through-current has occurred in the transistors T1 to T6 when both the condition that at least one of the absolute values |Iu|, |Iv|, |Iw| of the phase current values is larger than or equal to the first threshold Ith1 and the condition that the absolute value |SI| (= |Iu + Iv + Iw|) of the sum of the phase current values is larger than or equal to the second threshold Ith2 are satisfied. When it is determined that a through-current has occurred in the transistors T1 to T6, driving of the inverter circuit 20 is stopped.

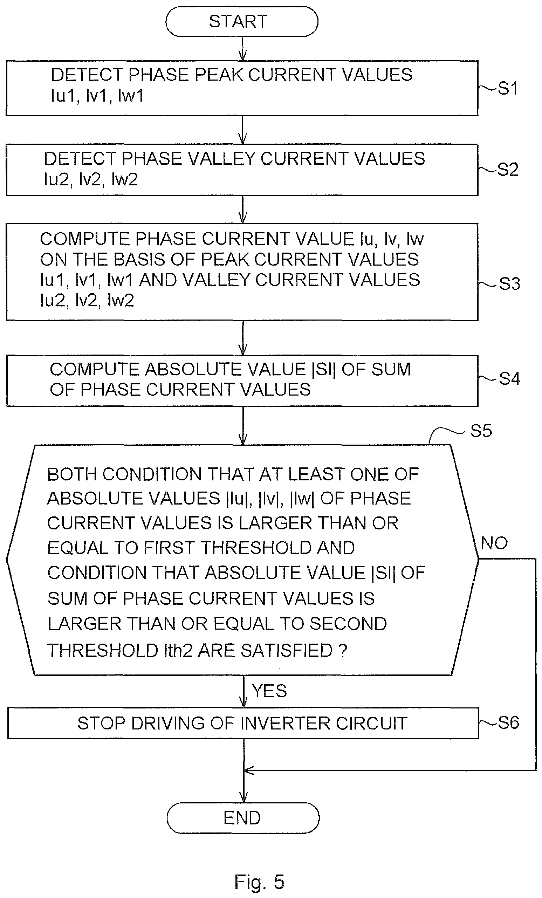

Next, the procedure of a process for stopping driving of the inverter circuit 20 on the basis of the phase current values Iu, Iv, Iw, which is executed by the microcomputer 50, will be described with reference to FIG. 5. Note that the process shown in FIG. 5 is actually repeatedly executed at predetermined computation cycles.

As shown in FIG. 5, in this process, first, phase peak current values Iu1, Iv1, Iw1 are detected by the current sensors 30u, 30v, 30w, respectively, at the timing at which the triangular wave δ reaches its peak (step S1), and phase valley current values Iu2, Iv2, Iw2 are detected by the current sensors 30u, 30v, 30w, respectively, at the timing at which the triangular wave δ reaches its valley (step S2). Subsequently, in step S3, the phase current values Iu, Iv, Iw are computed on the basis of the above-described Equations 1 to 3, and then the absolute value |SI| of the sum of the phase current values Iu, Iv, Iw is computed (step S4).

Next, it is determined whether the condition that at least one of the absolute values |Iu|, |Iu|, |Iw| of the phase current values is larger than or equal to the first threshold Ith1 and the condition that the absolute value |SI| of the sum of the phase current values is larger than or equal to the second threshold Ith2 are both satisfied (step S5). When it is determined that both of the conditions are satisfied (YES in step S5), it is determined that a through-current has occurred in the transistors T1 to T6 of the inverter circuit 20, and driving of the inverter circuit 20 is stopped (step S6).

On the other hand, when all the absolute values |Iu|, |Iu|, |Iw| of the phase current values are smaller than the first threshold Ith1 or the absolute value |SI| of the sum of the phase current values is smaller than the second threshold Ith2 (NO in step S5), the microcomputer 50 ends the process.

Next, an example of an operation of the motor control unit 15 according to the present embodiment will be described with reference to FIG. 2. As indicated by a long dashed double-short dashed line in FIG. 2, for example, when a short-circuit with a large resistance value has occurred between D and S of the transistor T1, the absolute value |Iu| of the U-phase current value detected by the current sensor 30u becomes an abnormal value that is larger than or equal to the first threshold Ith1. Because the U-phase current value Iu indicates an abnormal value, the absolute value |SI| of the sum of the phase current values becomes larger than or equal to the second threshold Ith2. Therefore, driving of the inverter circuit 20 is stopped, and all the transistors T1 to T6 are maintained in the off state. Thus, it is possible to suppress occurrence of a through-current in the transistor T2. As a result, it is possible to prevent damage to the transistor T2.

The following description will be provided on the assumption that the steering wheel 1 is swiftly operated until a rack end position is achieved, and thus a counter-electromotive force generated in the motor 11 suddenly decreases and an overshoot current occurs in the transistors T1 to T6. In this case, because the values Iu, Iv, Iw of the phase currents that are supplied to the motor 11 are normal, the absolute value |SI| of the sum of the phase current values detected by the current sensors 30u, 30v, 30w is a normal value. That is, the absolute value |SI| of the sum of the phase current values is smaller than the second threshold Ith2.

Therefore, there is no possibility that it is erroneously determined that a through-current has occurred in the transistors T1 to T6 of the inverter circuit 20, so it is possible to improve the reliability of detection of a through-current. In addition, it is possible to avoid a situation where, when the steering wheel of the vehicle is swiftly operated until the rack end position is achieved, the motor 11 stops and a driver's steering operation is no longer assisted. As a result, it is possible to significantly improve the reliability of the electric power steering system.

As described above, the motor control unit according to the present embodiment produces the following advantageous effects.

(1) The first threshold Ith1 is set for the absolute values |Iu|, |Iv|, |Iw| of the phase current values, and the second threshold Ith2 is set for the absolute value |SI| of the sum of the phase current values. It is determined that a through-current has occurred in the transistors T1 to T6 of the inverter circuit 20 when both the condition that at least one of the absolute values |Iu|, |Iv|, |Iw| of the phase current values is larger than or equal to the first threshold Ith1 and the condition that the absolute value |SI| of the sum of the phase current values is larger than or equal to the second threshold Ith2 are satisfied. Thus, when a through-current has occurred in the transistors T1 to T6 due to occurrence of a layer short with a large resistance value between D and S of one of the transistors or occurrence of a short-circuit between G and D of one of the transistors, it is possible to accurately detect occurrence of the through-current. In addition, when an overshoot current has occurred in the transistors T1 to T6 of the inverter circuit 20, there is no possibility that it is erroneously determined that a through-current has occurred in the transistors T1 to T6. Thus, it is possible to further reliably detect an abnormality that has occurred in the transistors T1 to T6.

(2) The phase current values Iu, Iv, Iw are calculated by computing differences between the peak current values Iu1, Iv1, Iw1 that are detected at the timing at which the triangular wave $\delta$, which is the PWM carrier, reaches its peak and the valley current values Iu2, Iv2, Iw2 that are detected at the timing at which the triangular wave reaches its valley. In this way, it is possible to accurately detect the phase current values Iu, Iv, Iw. Therefore, it is possible to further reliably determine whether a through-current has occurred in the transistors T1 to T6.

(3) The motor control unit according to the invention is applied to the motor control unit installed in the vehicle electric power steering system. Therefore, it is possible to avoid a situation where, when the steering wheel of the vehicle is swiftly operated until the rack end position is reached, the motor stops and a driver's steering operation is no longer assisted. As a result, it is possible to significantly improve the reliability of the electric power steering system.

Note that the following modifications may be made to the above-described embodiment.

In the above-described embodiment, whether a through-current has occurred in the transistors T1 to T6 of the inverter circuit 20 is determined by determining whether at least one of the absolute values |Iu|, |Iv|, |Iw| of the phase current values calculated based on the differences between the peak current values Iu1, Iv1, Iw1 and the valley current values Iu2, Iv2, Iw2 is larger than or equal to the first threshold Ith1. Instead of such a method that uses the absolute values of the phase current values, the following method may be employed. First, for example, in a case where a layer short with a large resistance value has occurred between D and S of the transistor T1 as shown in FIG. 2, when the transistor T2 is turned on, a downward through-current indicated by an arrowed dashed-line in FIG. 2 flows through the transistor T2. Therefore, the first threshold Ith1 may be set on the basis of the value of a through-current that flows through the transistors in such a case. Then, if at least one of the peak current values Iu1, Iv1, Iw1 is smaller than or equal to the first threshold Ith1, it may be determined that a through-current has occurred in the transistors T1 to T6. In this case, a current that flows downward as indicated by the arrowed dashed-line in FIG. 2 is detected as a negative current. With such a method as well, it is possible to obtain advantageous effects similar to those of the above-described embodiment.

In the above-described embodiment, when it is determined that a through-current ha occurred in the transistors T1 to T6 of the inverter circuit 20, driving of the inverter circuit 20 is stopped. Instead of this, alternative control for suppressing occurrence of a through-current may be executed. For example, a power supply path from the power supply 17 to the inverter circuit 20 may be interrupted.

In the above-described embodiment, the motor control unit according to the invention is applied to the electric power steering system that supplies an assist force to the column shaft 3 of the steering shaft 2. Alternatively, for example, the motor control unit according to the invention may be applied to an electric power steering system that applies an assist force to the rack shaft 7. In addition, the invention may be applied not only to a motor control unit for a vehicle electric power steering system but also to a motor control unit for any appropriate devices.

**Claims**

1. A motor control unit that supplies three-phase alternating currents to a motor by controlling switching of pairs of transistors provided in an inverter circuit, that detects, using current sensors, values of the phase currents that are supplied to the motor, and that determines whether a through-current has occurred in the pairs of transistors based on the detected phase current values, wherein:

   a first threshold is set for the phase current values;
   a second threshold is set for a sum of the phase current values; and
   it is determined whether a through-current has occurred in the transistors based on a comparison between each of the phase current values and the first threshold and a comparison between the sum of the phase current values and the second threshold, wherein:

   the comparison between each of the phase current values and the first threshold is made by determining whether at least one of absolute values of the phase current values is larger than or equal to the first threshold;
   the comparison between the sum of the phase current values and the second threshold is made by determining whether an absolute value of the sum of the phase current values is larger than or equal to the second threshold; and
   it is determined that a through-current has occurred in the transistors when both a condition that at least one of the absolute values of the phase current values is larger than or equal to the first threshold and a condition that the absolute value of the sum of the phase current values is larger than or equal to the second threshold are satisfied.

2. The motor control unit according to claim 1, wherein:

   switching of the transistors of the inverter circuit is controlled through PWM control in which a triangular wave is used as a carrier; and
   the phase current values are calculated by computing differences between phase current values detected by the current sensors at a timing at which the triangular wave reaches its peak and phase current values detected by the current sensors at a timing at which the triangular wave reaches its valley.

3. A vehicle electric power steering system that includes: a rack shaft of which movement in an axial direction of the rack shaft is restricted at a rack end; and a motor control unit that executes drive control of a motor provided at a steering shaft or the rack shaft, the vehicle electric power steering system applying an assist force from the motor to the steering shaft or the rack shaft, **characterized in that** the motor control unit according to claim 1 or 2 is used as the motor control unit.

**Patentansprüche**

1. Motor- Steuereinheit, die dreiphasige Wechselströme zu einem Motor speist, indem sie das Schalten von Paaren von Transistoren steuert, die in einer Inverterschaltung vorgesehen sind, die unter Verwendung von Stromsensoren Werte der Phasenströme detektiert, die zu dem Motor gespeist werden, und die basierend auf den detektierten Phasenstrom - Werten bestimmt, ob ein Durchgangsstrom in den Paaren von Transistoren aufgetreten ist, wobei:

ein erster Schwellenwert für die Phasen - Stromwerte festgelegt ist;
ein zweiter Schwellenwert für eine Summe der Phasen - Stromwerte festgelegt ist; und
bestimmt wird, ob ein Durchgangsstrom in den Transistoren aufgetreten ist, basierend auf einem Vergleich zwischen jedem der Phasen - Stromwerte und dem ersten Schwellenwert, und einem Vergleich zwischen der Summe der Phasen - Stromwerte und dem zweiten Schwellenwert, wobei:

der Vergleich zwischen jedem der Phasen - Stromwerte und dem ersten Schwellenwert getroffen wird, indem ermittelt wird, ob mindestens einer der Absolutwerte der Phasen - Stromwerte größer ist als oder gleich groß wie der erste Schwellenwert;
der Vergleich zwischen der Summe der Phasen - Stromwerte und dem zweiten Schwellenwert dadurch durchgeführt wird, dass ermittelt wird, ob ein absoluter Wert der Summe der Phasen - Stromwerte größer als oder gleich groß wie der zweite Schwellenwert ist; und
bestimmt wird, dass ein Durchgangsstrom in den Transistoren aufgetreten ist, wenn sowohl eine Bedingung, dass mindestens einer der absoluten Werte der Phasen - Stromwerte größer als oder gleich groß wie der erste Schwellenwert ist, und eine Bedingung, dass der absolute Wert der Summe der Phasen - Stromwerte größer als oder gleich groß wie der zweite Schwellenwert ist, erfüllt sind.

2. Motor - Steuereinheit nach Anspruch 1, wobei:

das Schalten der Transistoren der Inverterschaltung durch eine Pulsbreitenmodulation (PWM) - Steuerung gesteuert wird, bei der eine dreieckige Welle als ein Träger verwendet wird; und
die Phasen - Stromwerte berechnet werden, indem Unterschiede zwischen Phasen - Stromwerten berechnet werden, die durch die Stromsensoren mit einer zeitlichen Lage detektiert werden, bei der die dreieckige Welle ihren Spitzenwert erreicht, und Phasen - Stromwerte, die durch die Stromsensoren mit einer zeitlichen Lage detektiert sind, bei der die dreieckige Welle ihr Tal erreicht.

3. Elektrisches Fahrzeug -Servolenksystem, das aufweist: eine Zahnstange, bei der eine Bewegung in einer axialen Richtung der Zahnstange an einem Gestellende beschränkt ist; und eine Motor - Steuereinheit, die eine Antriebssteuerung eines Motors durchführt, der an einer Lenkstange oder der Zahnstange vorgesehen ist, wobei das elektrische Fahrzeug - Servolenksystem eine Unterstützungskraft von dem Motor auf die Lenkstange oder die Zahnstange ausübt, **dadurch gekennzeichnet, dass** die Motor-Steuereinheit gemäß dem Anspruch 1 oder 2 als die Motor - Steuereinheit verwendet wird.

## Revendications

1. Unité de commande de moteur qui fournit des courants alternatifs triphasés à un moteur en contrôlant la commutation de paires de transistors prévus dans un circuit d'inversion, qui détecte, à l'aide de détecteurs de courant, les valeurs des courants de phase qui sont fournis au moteur, et qui détermine si un courant traversant s'est produit dans les paires de transistors sur la base des valeurs de courant de phase détectées, dans laquelle :

un premier seuil est défini pour les valeurs de courant de phase ;
un second seuil est défini pour une somme des valeurs de courant de phase ; et
il est déterminé si un courant traversant s'est produit dans les transistors sur la base d'une comparaison entre chacune des valeurs de courant de phase et le premier seuil, et d'une comparaison entre la somme des valeurs de courant de phase et le second seuil, dans laquelle :

la comparaison entre chacune des valeurs de courant de phase et le premier seuil est effectuée en déterminant si au moins l'une des valeurs absolues des valeurs de courant de phase est supérieure ou égale au premier seuil ;
la comparaison entre la somme des valeurs de courant de phase et le second seuil est effectuée en déterminant si une valeur absolue de la somme des valeurs de courant de phase est supérieure ou égale au second seuil ; et
il est déterminé qu'un courant traversant s'est produit dans les transistors lorsqu'une condition selon laquelle au moins l'une des valeurs absolues des valeurs de courant de phase est supérieure ou égale au premier seuil et une condition selon laquelle la valeur absolue de la somme des valeurs de courant de phase est supérieure ou égale au second seuil sont satisfaites.

**2.** Unité de commande de moteur selon la revendication 1, dans laquelle :

la commutation des transistors du circuit d'inversion est contrôlée par le biais d'une commande à modulation de durée d'impulsion selon laquelle une onde triangulaire est utilisée comme support ; et

les valeurs de courant de phase sont calculées en calculant les différences entre les valeurs de courant de phase détectées par les détecteurs de courant au niveau desquels l'onde triangulaire atteint sa valeur maximale et les valeurs de courant de phase détectées par les détecteurs de courant à un moment auquel l'onde triangulaire atteint sa valeur minimale.

**3.** Système de direction assistée électrique de véhicule qui comprend : une crémaillère dont le mouvement dans une direction axiale est limité au niveau d'une extrémité de celle-ci ; et une unité de commande de moteur qui exécute une commande d'entraînement d'un moteur prévu au niveau d'un arbre de direction ou de la crémaillère, le système de direction assistée électrique de véhicule appliquant une force d'assistance qui provient du moteur à l'arbre de direction ou à la crémaillère, **caractérisé en ce que**

l'unité de commande de moteur selon la revendication 1 ou 2 est utilisée comme unité de commande de moteur.

Fig. 1

EP 2 594 459 B1

Fig. 2

EP 2 594 459 B1

VOLTAGE COMMAND SIGNAL Vw   VOLTAGE COMMAND SIGNAL Vu   TRIANGULAR WAVE δ   VOLTAGE COMMAND SIGNAL Vv

Fig. 3A   PWM CARRIER VOLTAGE COMMAND SIGNALS

Fig. 3B   GATE DRIVING SIGNAL GH1   ON OFF

Fig. 3C   GATE DRIVING SIGNAL GL1   ON OFF

Fig. 3D   GATE DRIVING SIGNAL GH2   ON OFF

Fig. 3E   GATE DRIVING SIGNAL GL2   ON OFF

Fig. 3F   GATE DRIVING SIGNAL GH3   ON OFF

Fig. 3G   GATE DRIVING SIGNAL GL3   ON OFF

t1 t2   TIME

Fig. 4

START

DETECT PHASE PEAK CURRENT VALUES
Iu1, Iv1, Iw1 —S1

DETECT PHASE VALLEY CURRENT VALUES
Iu2, Iv2, Iw2 —S2

COMPUTE PHASE CURRENT VALUE Iu, Iv, Iw
ON THE BASIS OF PEAK CURRENT VALUES
Iu1, Iv1, Iw1 AND VALLEY CURRENT VALUES
Iu2, Iv2, Iw2 —S3

COMPUTE ABSOLUTE VALUE |SI| OF SUM
OF PHASE CURRENT VALUES —S4

—S5

BOTH CONDITION THAT AT LEAST ONE OF
ABSOLUTE VALUES |Iu|, |Iv|, |Iw| OF PHASE
CURRENT VALUES IS LARGER THAN OR
EQUAL TO FIRST THRESHOLD AND
CONDITION THAT ABSOLUTE VALUE |SI| OF
SUM OF PHASE CURRENT VALUES IS
LARGER THAN OR EQUAL TO SECOND
THRESHOLD Ith2 ARE SATISFIED ?

NO

YES

STOP DRIVING OF INVERTER CIRCUIT —S6

END

Fig. 5

Fig. 6    (PRIOR ART)

Fig. 7    (PRIOR ART)

**REFERENCES CITED IN THE DESCRIPTION**

**Patent documents cited in the description**

- EP 2322409 A1
- EP 2164169 A
- US 2009073517 A